# FASCICULE DE BREVET EUROPEEN

(11) **EP 4 332 066 B1**
(45) Date de publication et mention de la délivrance du brevet: **25.03.2026**
(21) Numéro de dépôt: 23194719.3
(22) Date de dépôt: 31.08.2023
(51) Int. Cl.: C02F 1/32

(54) **DISPOSITIF DE TRAITEMENT D'UN LIQUIDE PAR RAYONNEMENTS ULTRA-VIOLETS**
VORRICHTUNG ZUR BEHANDLUNG EINER FLÜSSIGKEIT MITTELS ULTRAVIOLETTSTRAHLUNG
DEVICE FOR TREATING A LIQUID WITH ULTRAVIOLET RADIATION

(30) Priorité: 02.09.2022 FR 2208840
(43) Date de publication de la demande: 06.03.2024
(73) Titulaire: Behring, 38240 Meylan (FR)
(72) Inventeur: PELLET, Xavier, 38410 SAINT MARTIN D'URIAGE (FR)
(74) Mandataire: Casalonga

(56) Documents cités:
- DE-U1- 202022 104 664
- US-A1- 2015 314 024
- US-A1- 2021 206 662
- US-A1- 2022 176 336

## Description

La présente invention concerne le domaine des dispositifs de traitement de liquide par rayonnements ultra-violets (UV).

Une application particulièrement intéressante de l'invention concerne le traitement de l'eau pour éradiquer les micro-organismes contenus dans celle-ci. Ces micro-organismes peuvent par exemple être des bactéries vivant isolées ou en colonies sous forme de biofilms, ou des virus ou encore des algues microscopiques.

Le dispositif est destiné à être utilisé au point final d'utilisation avec une distribution du liquide au consommateur directement à la sortie dudit dispositif, en étant par exemple monté sur une fontaine d'eau, un robinet, etc.

Pour réaliser un tel traitement de l'eau et ainsi obtenir une destruction des micro-organismes, il existe des dispositifs d'irradiation par rayonnement UV.

Par exemple, le brevet EP-B1-1 444 168 décrit, un appareil de traitement pourvu d'un boîtier, d'un canal d'amenée central du liquide s'étendant à l'intérieur du boîtier, d'un manchon optique disposé autour du canal d'amenée, et d'une lampe apte à émettre un rayonnement UV à l'intérieur du canal d'amenée pour le traitement du liquide dans ce canal.

L'appareil comprend également une chambre de recirculation du fluide traité qui est en communication avec l'extrémité inférieure du canal d'amenée central et qui est délimitée radialement entre d'une part le boîtier et d'autre part le canal d'amenée et le manchon optique.

Un tel appareil a pour inconvénient majeur de ne pas permettre un traitement efficace du flux d'eau introduit à l'intérieur de celui-ci.

On connait également, par le document DE 20 2022 104664 un dispositif de traitement de liquide par rayonnements UV comprenant un boîtier, un canal d'amenée du liquide, un canal de sortie dudit liquide s'étendant axialement, et un conduit à doubles parois monté à l'intérieur du boîtier et pourvu d'un orifice d'entrée en communication fluidique avec le canal d'amenée. La paroi externe et la paroi interne du conduit délimitent radialement entre elles une chambre de traitement du liquide.

Le dispositif comprend également des sources UV qui irradient l'intérieur de la chambre de traitement et l'intérieur de la paroi interne du conduit à doubles parois. Une plaque transparente aux UV est prévue pour isoler les sources UV de la chambre de traitement. La plaque transparente aux UV est montée en appui contre la paroi externe du conduit à doubles parois.

Avec cette conception, il est nécessaire d'équiper le dispositif d'un grand nombre de joints d'étanchéité, à savoir un premier joint d'étanchéité entre le boîtier et la plaque transparente, un deuxième joint d'étanchéité entre le boîtier et le conduit à doubles parois, un troisième joint d'étanchéité entre la paroi externe du conduit à doubles parois et la plaque transparente, et un quatrième joint d'étanchéité entre la paroi externe du conduit à doubles parois et le canal d'amenée du liquide.

Par ailleurs, dans ce document antérieur, la surface interne de la paroi interne du conduit à doubles parois est pourvue d'une couche réfléchissante pour réfléchir les UV émis et dirigés l'intérieur de ce conduit. Ceci limite l'irradiation du liquide traité.

D'autres dispositifs sont divulgués dans US 2021/206662 A1, US 2022/176336 A1 et US 2015/314024 A1.

La présente invention vise à remédier à ces inconvénients.

Plus particulièrement, la présente invention vise à accroitre l'irradiation du liquide traité et à simplifier l'étanchéité du dispositif.

L'invention concerne un dispositif de traitement de liquide par rayonnements UV selon la revendication 1, et un procédé de traitement de liquide à l'aide dudit dispositif selon la revendication 13.

Par « direction principale d'émission », on entend la direction dans laquelle une intensité maximale du rayonnement UV émis par la source considérée est mesurée.

Par « direction orientée selon l'axe longitudinal du boîtier », on entend que cette direction s'étend selon une direction parallèle, ou sensiblement parallèle, à l'axe longitudinal du boîtier.

Selon l'invention, le conduit est transparent aux UV.

Selon l'invention, le dispositif comprend en outre :
- un fourreau monté à l'intérieur du boîtier, entourant radialement le conduit et restant radialement et axialement à distance dudit conduit,
- le fourreau étant pourvu d'une paroi de fond transparente aux UV et délimitant axialement au moins en partie la chambre de traitement, et d'une paroi tubulaire délimitant radialement au moins en partie la chambre de traitement, la paroi tubulaire prolongeant axialement la paroi de fond, l'extrémité supérieure dudit conduit restant axialement à distance de la paroi de fond du fourreau.

Le fourreau est une pièce distincte du conduit. Autrement dit, le fourreau et le conduit sont deux pièces séparées.

Compte tenu de sa conception, le dispositif de traitement permet d'optimiser l'efficacité de traitement du liquide à l'intérieur de la chambre de traitement et du conduit.

En outre, avec la disposition des sources de rayonnement UV et l'agencement coaxial du canal de sortie et du conduit, on obtient un traitement par UV jusqu'à l'intérieur du canal de sortie, ce qui permet d'éviter la rétro-contamination du dispositif sur la surface du canal de sortie par l'environnement extérieur comme l'air ambiant ou le contact humain.

Le fait que le conduit soit transparent aux UV permet en outre d'accroitre l'irradiation du liquide qui circule à l'intérieur du conduit. En effet, les rayons qui sont émis à l'intérieur de la chambre de traitement, et ceux éventuellement réfléchis par la surface intérieure du boîtier, peuvent traverser l'épaisseur du conduit en plus du rayonnement UV qui est émis directement à l'intérieur du conduit.

Par ailleurs, la prévision du fourreau qui est une pièce séparée du conduit associée à sa conception avec paroi de fond transparente aux UV et paroi tubulaire prolongeant axialement la paroi de fond permettent de simplifier l'étanchéité du dispositif et réduisant le nombre de joint d'étanchéité.

Avantageusement, le conduit est supporté par le boîtier. De préférence, l'extrémité inférieure du conduit est disposée à l'intérieur d'une portion de montage tubulaire du boîtier, notamment par emmanchement.

Ainsi, on assure un maintien constant de la position radiale relative du boîtier et du conduit.

Avantageusement, le canal d'amenée débouche à l'intérieur du boîtier dans une zone espacée axialement du fourreau. Autrement dit, le canal d'amenée ne s'étend pas au travers du fourreau. Ceci permet de limiter encore le nombre de joint d'étanchéité à prévoir.

Le canal de sortie et le conduit peuvent être coaxiaux avec l'axe longitudinal du boîtier. Ceci permet d'obtenir un traitement homogène en rayonnement UV du flux de liquide avec en outre une conception simple du dispositif.

Selon une conception particulière, le dispositif peut comprendre en outre une source additionnelle de rayonnement UV supportée par le boîtier, centrée sur l'axe du conduit et ayant une direction principale d'émission qui est orientée selon l'axe longitudinal du boîtier. Ceci favorise encore l'irradiation à l'intérieur du canal de sortie.

Les sources de rayonnement UV dudit groupe sont disposées sur le boîtier axialement du côté de l'extrémité supérieure du conduit en étant décalées axialement par rapport à ladite extrémité supérieure.

De préférence, les sources de rayonnement UV dudit groupe sont disposées hors de la chambre de traitement. Ainsi, il n'est pas nécessaire de prévoir des moyens d'étanchéité spécifiques pour les sources de rayonnement UV.

Les sources de rayonnement UV dudit groupe peuvent être décalées radialement au moins en partie par rapport au conduit.

Le fourreau peut être disposé en aval du moyen d'homogénéisation en considérant le sens d'écoulement du liquide.

Avantageusement, au moins une partie de la surface extérieure ou de la surface intérieure de la paroi tubulaire du fourreau est réfléchissante aux UV.

Dans un mode de réalisation qui ne fait pas partie de l'objet des revendications, le moyen d'homogénéisation peut comprendre au moins un plateau radial supporté par le boîtier et pourvu d'une pluralité d'orifices traversants.

Le canal d'amenée peut déboucher radialement à l'intérieur du boîtier et peut être situé dans un plan médian longitudinal dudit dispositif contenant l'axe longitudinal.

Selon l'invention, le moyen d'homogénéisation comprend une rampe hélicoïdale s'étendant au moins en partie autour de l'axe longitudinal du boîtier, le canal d'amenée débouchant à l'intérieur du boîtier dans la zone de la rampe hélicoïdale en étant décalé par rapport à un plan médian longitudinal dudit dispositif contenant l'axe longitudinal. Le canal d'amenée peut déboucher tangentiellement à l'intérieur du boîtier.

Dans un mode de réalisation, les sources de rayonnement UV dudit groupe peuvent être espacées les unes par rapport aux autres dans le sens circonférentiel, par exemple pour former une ou des couronnes circulaires de sources. Ceci favorise l'obtention d'un traitement homogène en rayonnement UV. Alternativement, il reste cependant possible de prévoir d'autres dispositions des sources de rayonnement UV dudit groupe, par exemple selon un agencement polygonal ou encore elliptique.

Les sources de rayonnement UV dudit groupe peuvent être des sources ponctuelles. Les sources de rayonnement UV dudit groupe peuvent par exemple être des LED UV. A titre d'exemple, les LED peuvent par exemple être du type COB ou SMD (Chip-on-Board ou Surface Mounted Device en langue anglaise). Les sources de rayonnement UV peuvent ou non être équipées d'un moyen optique, telle qu'une lentille.

Le rayonnement UV émis par les sources peut indifféremment être des rayons UVA et/ou UVB et/ou UVC.

Dans un mode de réalisation, le volume intérieur de la chambre de traitement est supérieur au volume intérieur du conduit, de préférence supérieur d'au moins 150 %.

Ceci permet d'accroitre l'efficacité de traitement par rayonnement UV du liquide qui transite à l'intérieur u dispositif.

Avantageusement, la section de passage du conduit est comprise entre 80% et 120% de la section de passage du canal de sortie. Ceci permet de minimiser le volume de liquide qui peut s'écouler après la fermeture de l'organe de distribution de liquide situé en amont du dispositif de traitement.

Dans un mode de réalisation, le boitier comprend un corps supportant le canal d'amenée et le canal de sortie, et un capot fixé de manière amovible sur le corps et supportant les sources de rayonnement UV dudit groupe.

Selon une première conception, le conduit est entièrement logé à l'intérieur du boitier.

Selon une deuxième conception alternative, le conduit peut s'étendre en saillie axiale par rapport au boitier.

Le conduit et le canal de sortie peuvent être formées par deux pièces distinctes. Alternativement, le canal de sortie pourrait être formé par la partie d'extrémité inférieure du conduit.

De préférence, la surface intérieure du canal de sortie peut être recouverte d'un matériau réfléchissant les UV, par exemple du Téflon^{®} ou de l'aluminium.

Par ailleurs, le dispositif peut par exemple présenter une section transversale circulaire. Alternativement, le dispositif peut présenter une section transversale polygonale, par exemple triangulaire, rectangulaire, carrée, etc.

La présente invention sera mieux comprise à la lecture de la description détaillée de modes de réalisation pris à titre d'exemples nullement limitatifs et illustrés par les dessins annexés sur lesquels :
[Fig 1] est une vue en perspective d'un dispositif de traitement de liquide selon un exemple de réalisation de l'invention,
[Fig 2] est une vue de face du dispositif de la figure 1,
[Fig 3] est une vue en coupe selon l'axe III-III de la figure 2,
[Fig 4] est une vue en coupe selon l'axe IV-IV de la figure 3,
[Fig 5] est une vue de face d'un dispositif de traitement de liquide selon un autre exemple de réalisation qui ne fait pas partie de l'objet des revendications, et
[Fig 6] est une vue en coupe selon l'axe VI-VI de la figure 5.

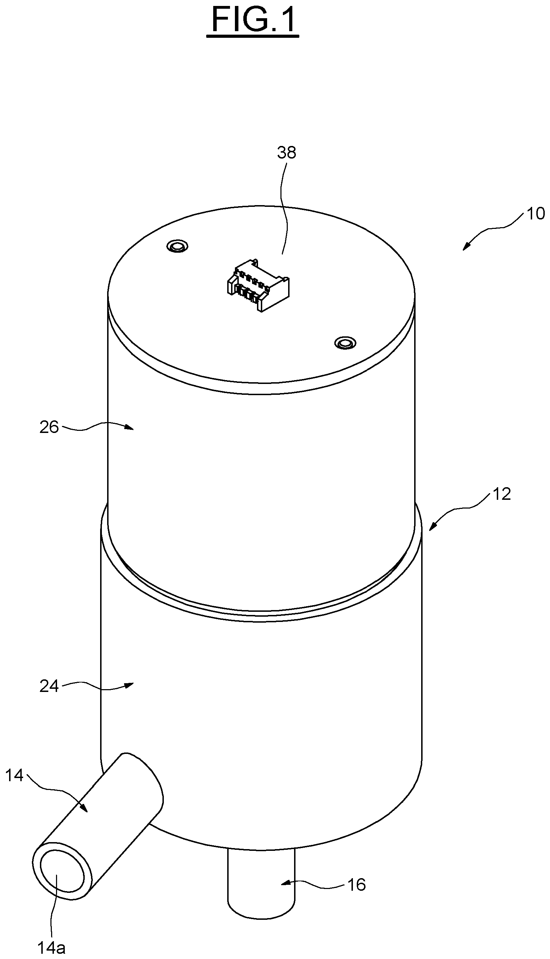

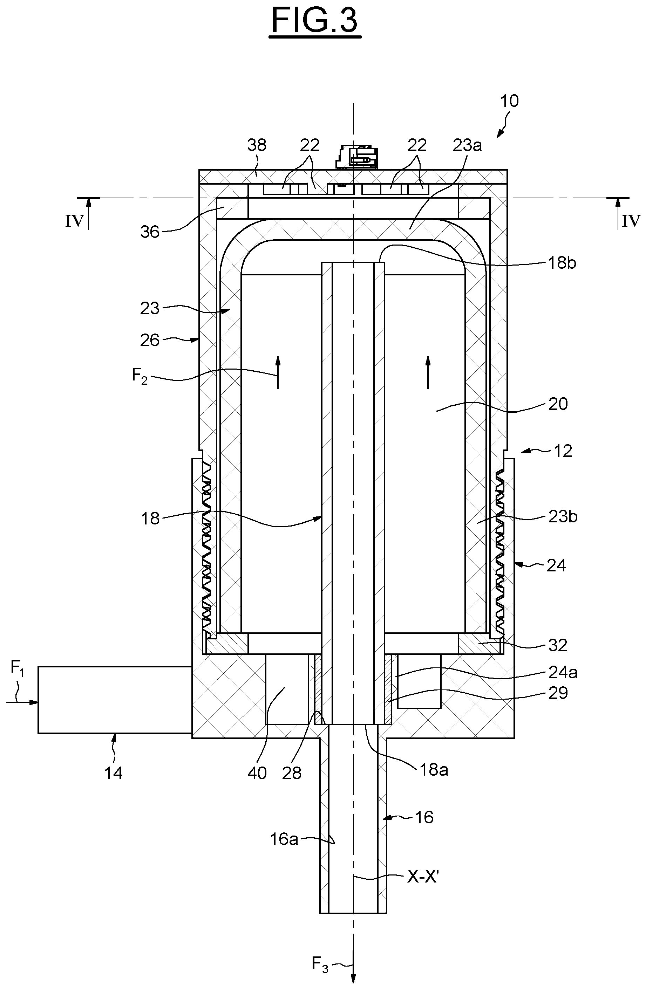

Sur les figures 1 à 4, on a représenté un module ou dispositif, référencé 10 dans son ensemble, qui est destiné au traitement de liquide par rayonnements UV. Une utilisation avantageuse du dispositif 10 concerne le traitement de l'eau, notamment de l'eau pétillante.

Le dispositif 10 comprend un carter ou boîtier 12 s'étendant selon un axe X-X' longitudinal. Dans la description qui suit, les directions « axiale » et « radiale » sont définies en référence à l'axe X-X' longitudinal.

Le dispositif 10 comprend un conduit d'entrée 14 délimitant intérieurement un canal d'amenée 14a du liquide à l'intérieur du boîtier 12, et un conduit de sortie 16 délimitant intérieurement un canal de sortie 16a dudit liquide à l'extérieur dudit boîtier. Le conduit de sortie 16 s'étend axialement. Dans l'exemple de réalisation illustré, le conduit de sortie 16 est coaxial avec l'axe X-X'. Dans l'exemple de réalisation illustré, le conduit d'entrée 14 s'étend radialement. Dans l'exemple de réalisation illustré, le canal d'amenée 14a et le canal de sortie 16a présentent une section transversale circulaire. Alternativement, le canal d'amenée 14a et/ou le canal de sortie 16a peuvent présenter une section transversale polygonale, par exemple rectangulaire, carrée, etc.

Le conduit d'entrée 14 et le conduit de sortie 16 sont supportés par le boîtier 12. Le conduit d'entrée 14 est rapporté sur le boîtier 12 par tout moyen approprié, ici par emmanchement. Dans l'exemple de réalisation illustré, le conduit de sortie 16 est réalisé monobloc avec le boîtier 12. Alternativement, le conduit de sortie 16 pourrait être rapporté sur le boîtier 12.

Le dispositif 10 comprend encore un conduit 18 de recirculation monté à l'intérieur du boîtier 12 et s'étendant à l'intérieur de celui-ci. Le conduit 18 s'étend axialement. Le conduit 18 est coaxial avec le canal de sortie 16, et est donc aussi ici coaxial à l'axe X-X'. Le conduit 18 est supporté par le boîtier 12. L'extrémité inférieure 18a du conduit est en communication fluidique avec le canal de sortie 16a du conduit de sortie. La section de passage du conduit 18 est par exemple comprise entre 80% et 120% de la section de passage du canal de sortie 16a.

Le conduit 18 se présente sous la forme d'un tube. Dans l'exemple de réalisation illustré, le conduit 18 présente une section transversale circulaire. Alternativement, le conduit 18 peut présenter une section transversale polygonale, par exemple rectangulaire, carrée, etc.

Le dispositif 10 comprend également une chambre de traitement 20 du liquide qui est située à l'intérieur du boîtier 12. Le canal d'amenée du conduit d'entrée 14 débouche à l'intérieur de la chambre de traitement 20. Le canal d'amenée débouche sur l'alésage du boîtier 12. Le conduit 18 s'étend en partie à l'intérieur de la chambre de traitement 20. L'extrémité supérieure 18b du conduit est située à l'intérieur de la chambre de traitement 20. Le volume intérieur de la chambre de traitement 20 est supérieur au volume intérieur du conduit 18. De préférence, le volume intérieur de la chambre de traitement 20 est supérieur d'au moins 150 % au volume intérieur du conduit 18.

Comme cela sera décrit plus en détail par la suite, le dispositif 10 comprend également un groupe de sources 22 de rayonnement UV supportées par boîtier 12 et aptes à émettre un rayonnement UV pour le traitement du liquide à l'intérieur de la chambre de traitement 20 et à l'intérieur du conduit 18.

Comme cela sera également décrit plus en détail par la suite, le dispositif 10 comprend en outre un fourreau 23 monté à l'intérieur du boîtier 12 et délimitant en partie la chambre de traitement 20. Le fourreau 23 est une pièce distincte du conduit 18. Le canal d'amenée 14a du conduit d'entrée débouche à l'intérieur du boîtier 12 dans une zone espacée axialement du fourreau 23.

Dans l'exemple de réalisation illustré, le boîtier 12 comprend un corps 24 de module, et un capot 26 fixé de manière amovible sur le corps. Le corps 24 est réalisé dans un matériau non transparent aux UV. Le corps 24 peut par exemple être réalisé en matière synthétique, par exemple en POM (polyoxyméthylène). Alternativement, le corps 24 peut être réalisé en matière métallique, notamment en matière métallique réfléchissante aux UV tel que du Téflon^{®} ou de l'aluminium. Le conduit d'entrée 14 peut également être réalisé en matière métallique, notamment en inox. Le capot 26 peut par exemple être réalisé en matière métallique, notamment en matière métallique conductrice de chaleur et éventuellement réfléchissante aux UV tel que du Téflon^{®} ou de l'aluminium.

Le capot 26 supporte les sources 22 de rayonnement UV. Le capot 26 est fixé sur le corps 24 axialement du côté opposé au conduit de sortie 16. Le capot 26 est fixé de manière amovible sur le corps 24 par tout moyen approprié, ici par vissage.

Le corps 24 est équipé du conduit d'amenée 14 et du conduit de sortie 16. Le corps 24 supporte le conduit 18. L'extrémité inférieure 18a du conduit est fixé au corps 24. L'extrémité inférieure 18a du conduit est située à l'intérieur d'une portion de montage 24a tubulaire du corps. L'extrémité inférieure 18a du conduit est axialement en appui contre un siège 28 ménagé dans la partie inférieure du corps 24. Dans l'exemple de réalisation illustré, un joint 29 d'étanchéité annulaire est interposé radialement entre le conduit 18 et le siège 28. Alternativement, il pourrait être possible de ne pas prévoir le joint 29.

Comme indiqué précédemment, le dispositif 10 comprend le fourreau 23 délimitant en partie la chambre de traitement 20. Le fourreau 23 est ouvert axialement du côté du conduit de sortie 16. Le fourreau 23 est réalisé monobloc, i.e. en une seule pièce. Le fourreau 23 est pourvu d'une paroi de fond 23a radiale et d'une paroi tubulaire 23b prolongeant axialement la paroi de fond 23a. La paroi tubulaire 23b axiale prolonge le bord de grand diamètre de la paroi de fond 23a.

Le fourreau 23 est coaxial avec l'axe X-X'. Le fourreau 23 entoure radialement le conduit 18 et reste radialement et axialement à distance de celui-ci. Le conduit 18 s'étend en partie à l'intérieur du fourreau 23. L'extrémité supérieure 18b du conduit reste axialement à distance de la paroi de fond 23a du fourreau. De préférence, l'extrémité supérieure 18b du conduit est située à quelques millimètres de la paroi de fond 23a du fourreau pour forcer le passage des gouttes d'eau à proximité immédiate des sources 22 de rayonnement UV. La paroi de fond 23a est située axialement entre l'extrémité supérieure 18b du conduit et les sources 22 de rayonnement UV.

Le fourreau 23 est transparent aux UV. Le fourreau 23 est réalisé dans un matériau transparent aux UV, par exemple transparent aux UV a au moins 50%. Le fourreau 23 peut par exemple être réalisé en quartz, ou en FEP (éthylène propylène fluoré) ou encore en PTFE (polytétrafluoroéthylène). Alternativement, il pourrait être possible de prévoir que seule la paroi de fond 23a est réalisée dans un matériau transparent aux UV.

La chambre de traitement 20 du liquide est délimitée axialement par le fourreau 23 et par le boîtier 12. La chambre de traitement 20 est délimitée axialement par la paroi de fond 23a du fourreau et par le corps 24 du boîtier. La chambre de traitement 20 est délimitée radialement en partie par le fourreau 23 et par le conduit 18. La chambre de traitement 20 est délimitée radialement en partie par la surface intérieure de la paroi tubulaire 23b du fourreau 23 et par la surface extérieure 18c du conduit. Les sources 22 de rayonnement UV sont disposés hors de la chambre de traitement 20.

Le boîtier 12 comprend intérieurement un premier joint 32 d'étanchéité annulaire interposé axialement entre le fourreau 23 et le boîtier 12. Le joint 32 est interposé axialement entre la paroi tubulaire du fourreau et le corps 24 du boîtier. Le boîtier 12 comprend également un deuxième joint 36 d'étanchéité annulaire interposé axialement entre la paroi de fond 23a du fourreau et le capot 26 du boîtier. Le capot 26 assure le maintien en position du fourreau 23.

La chambre de traitement 20 est délimitée radialement par la surface intérieure de la paroi tubulaire 23b du fourreau, par le joint 32 d'étanchéité, par le corps 24 du boîtier et par la surface extérieure 18c du conduit.

Le boîtier 12 comprend encore une platine 38 rapportée sur le capot 26 et sur laquelle sont fixées les sources 22 de rayonnement UV. La platine 38 est fixée à l'extrémité supérieure du capot 26 du boîtier par tout moyen approprié ici par vissage. La platine 38 peut par exemple être une carte de circuit imprimé. La platine 38 peut par exemple être réalisée en matière métallique, notamment en matière métallique conductrice de chaleur.

Les sources 22 de rayonnement UV sont disposées axialement en regard de la paroi de fond 23a du fourreau. Les sources 22 du groupe de rayonnement UV sont décalées radialement en partie par rapport au conduit 18.

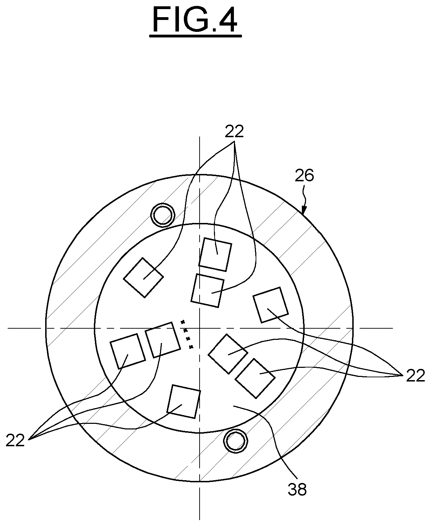

Comme cela est visible sur la figure 4, dans l'exemple de réalisation illustré, les sources 22 sont agencées de sorte à former un premier groupe de sources situées à équidistances de l'axe X-X' du boîtier et un deuxième groupe de sources situées aussi à équidistances de l'axe X-X' du boîtier. Les sources de chaque groupe sont espacées les unes par rapport aux autres dans le sens circonférentiel, ici de manière régulière.

De préférence, les sources 22 sont identiques entre elles. Les sources 22 peuvent être des sources ponctuelles. Les sources 22 peuvent par exemple être des diodes électroluminescentes classiquement nommées LED. Dans l'exemple de réalisation illustré, les sources 22 sont au nombre de neuf. Alternativement, il est possible de prévoir un nombre différent de sources 22. Il est également possible de prévoir une disposition différente des sources 22.

Chaque source 22 est apte à émettre un rayonnement UV ayant une direction principale d'émission qui est axiale. Lorsque les sources 22 sont des LED ponctuelles notamment, chaque source 22 émet un rayonnement UV selon un cône d'émission, l'axe de ce cône définissant la direction principale d'émission.

Le rayonnement UV des sources 22 est émis à l'intérieur de la chambre de traitement 20 et à l'intérieur du conduit 18. Le rayonnement UV issu des sources 22 est émis directement sans réflexion à l'intérieur de la chambre de traitement 20 et à l'intérieur du conduit 18, uniquement via une réfraction à travers la paroi de fond 23a du fourreau.

De sorte à favoriser la réflexion des rayons UV une fois émis à l'intérieur de la chambre de traitement 20 par les sources 22, la surface intérieure ou la surface extérieure de la paroi tubulaire 23b du fourreau est de préférence recouverte d'un matériau réfléchissant les UV, par exemple du Téflon^{®} ou de l'aluminium.

Les rayons UV issus des sources 22 et réfléchis par la paroi tubulaire 23b du fourreau sont renvoyés de nouveau dans la chambre de traitement 20 et vers le conduit 18.

Le conduit 18 réalisé dans un matériau transparent aux UV, par exemple transparent aux UV a au moins 50%. Le conduit 18 peut par exemple être réalisé en quartz, ou en FEP (éthylène propylène fluoré), ou encore en PTFE (polytétrafluoroéthylène). Ainsi, les rayons UV réfléchis la paroi tubulaire 23b du fourreau irradient l'intérieur du conduit 18.

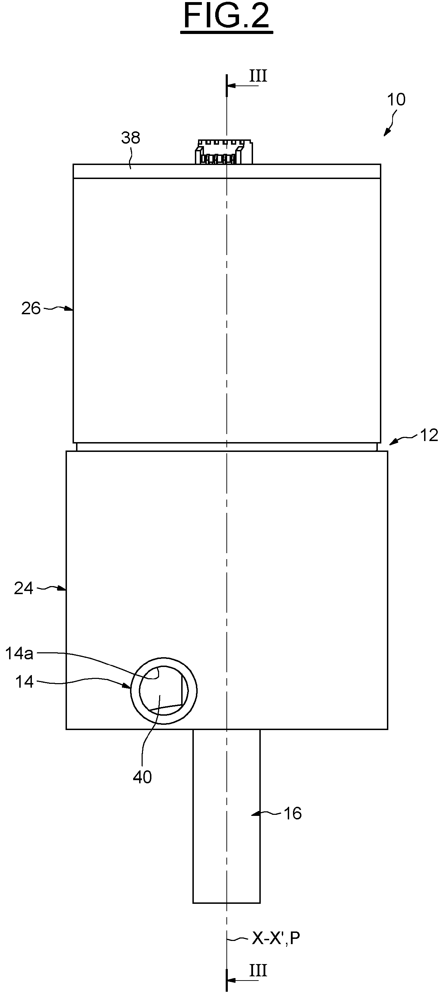

Dans cet exemple de réalisation, le conduit d'entrée 14 est décalé par rapport à un plan médian P longitudinal du dispositif 10 contenant l'axe X-X' longitudinal, comme cela est notamment visible à la figure 2.

Le boîtier 12 comprend une rampe 40 hélicoïdale s'étendant autour de l'axe X-X' longitudinal. La rampe 40 est formée ici sur le boîtier 12, i.e. sur le corps 24 du boîtier. Alternativement, la rampe 40 pourrait être rapportée sur le boîtier 12. La rampe 40 est orienté axialement vers le haut, i.e. en direction de la paroi de fond 23a du fourreau. La rampe 40 est disposée en amont du fourreau 23 en considérant le sens d'écoulement du liquide.

Comme indiqué précédemment, le canal d'amenée du conduit d'entrée 14 débouche à l'intérieur de la chambre de traitement 20. Le canal d'amenée débouche tangentiellement à l'intérieur de la chambre de traitement 20. Le canal d'amenée du conduit d'entrée 14 débouche dans la zone de la rampe 40 hélicoïdale.

Par ailleurs, comme indiqué précédemment, la chambre de traitement 20 du liquide est délimitée axialement par la paroi de fond 23a du fourreau et par le boîtier 12. Plus précisément, la chambre de traitement 20 du liquide est délimitée axialement par la paroi de fond 23a du fourreau et par la rampe 40 du boîtier.

Le fonctionnement du dispositif 10 est le suivant.

Le flux de liquide F₁ est amené tangentiellement à l'intérieur de la chambre de traitement 20 par le canal d'amenée 14a du conduit d'entrée de l'injecteur. Ce flux de liquide est entrainé en rotation autour de l'axe X-X' longitudinal par la rampe 40 du boîtier. Ceci créé un régime tourbillonnaire à l'intérieur de la chambre de traitement 20 et autour du conduit 18 dès l'introduction du liquide à l'intérieur de celle-ci, ce qui permet d'éviter d'avoir des zones où le liquide puisse stagner. En outre, la rampe 40 forme un moyen d'homogénéisation de la vitesse axiale du liquide à l'intérieur de la chambre.

Le flux liquide F₂ remonte à l'intérieur de la chambre de traitement 20. Le liquide remonte jusqu'à la paroi de fond 23a du fourreau et passe à proximité immédiate des sources 22. Les gouttes de liquide sont irradiées de façon homogène par le rayonnement UV émis par les sources 22 dans la mesure où ces gouttes se déplacent sensiblement à la même vitesse.

Ensuite, le flux de liquide F₃ passe à l'intérieur du conduit 18 avant d'être évacué par le conduit de sortie 16. Le flux de liquide F₃ est aussi traité à l'intérieur du conduit 18 et du conduit de sortie 16 par le rayonnement UV émis par les sources 22. Lors du fonctionnement du dispositif 10, les sources 22 émettent un rayonnement d'UV en continu.

La disposition des sources 22 pour émettre un rayonnement UV dirigé vers la chambre de traitement 20 mais aussi vers l'intérieur du conduit ainsi que l'agencement coaxial du conduit 18 et du conduit de sortie 16 permettent d'assurer un traitement jusqu'à la dernière goutte de liquide.

Dans la mesure où le dispositif 10 est destiné à être utilisé au point final d'utilisation avec une distribution du liquide directement à la sortie du canal de sortie 16a, ceci permet d'éviter la rétro-contamination du dispositif par l'environnement extérieur comme l'air ambiant ou le contact humain.

Enfin, lorsque le liquide traité est de l'eau pétillante, l'espace axial qui subsiste entre l'extrémité supérieure 18b du conduit et la paroi de fond 23a du fourreau permet d'obtenir le dégazage de l'eau qui reste à l'intérieur du boîtier 12.

Dans l'exemple de réalisation précédemment décrit, le canal d'amenée du conduit d'entrée 14 débouche tangentiellement à l'intérieur de la chambre de traitement 20.

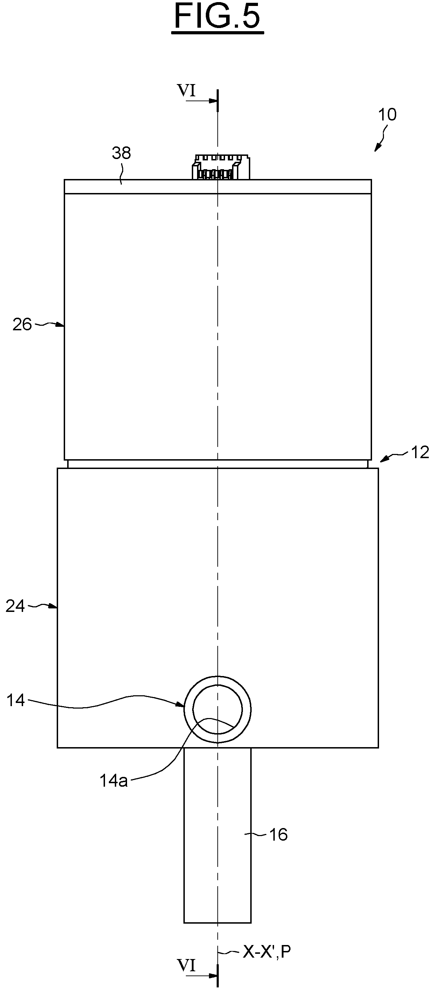

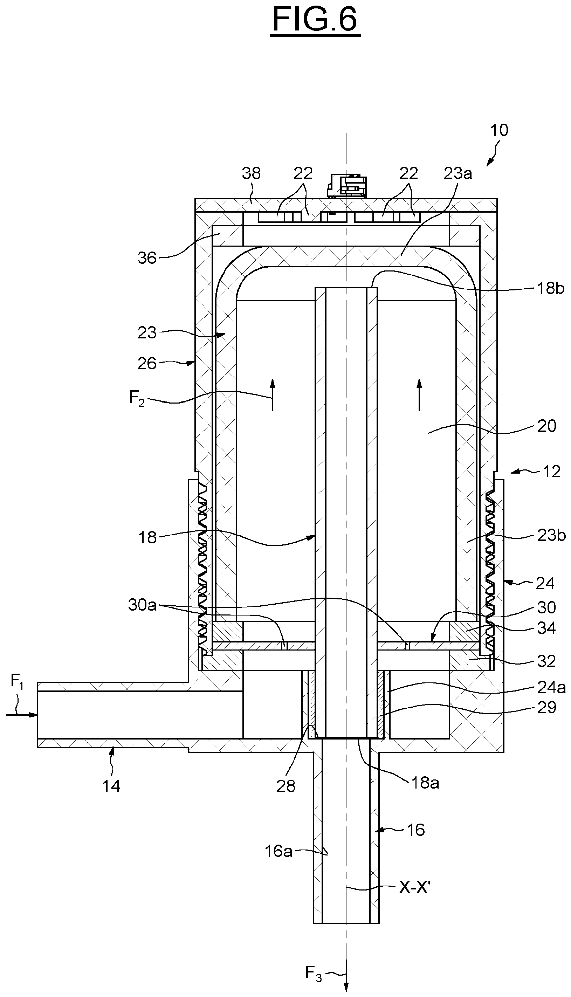

Alternativement, il est possible de prévoir d'autres agencements. Par exemple, dans l'exemple de réalisation qui ne fait pas partie de l'objet des revendications et qui est illustré aux figures 5 et 6, sur lesquelles les éléments identiques portent les mêmes références, le canal d'amenée du conduit d'entrée 14 débouche radialement à l'intérieur de la chambre de traitement 20. Le conduit d'entrée 14 est situé dans le plan médian P longitudinal du dispositif 10 contenant l'axe X-X' longitudinal.

Dans cet exemple de réalisation, le boîtier 12 n'est pas équipé de la rampe 40.

Le dispositif 10 comprend ici un plateau 30 radial supporté par le boîtier 12 et monté autour du conduit 18. Le plateau 30 est disposé à l'intérieur du boîtier 12 en amont du fourreau 23 en considérant le sens d'écoulement du liquide. Le plateau 30 est disposé axialement entre le fourreau 23 et le corps 24 du boîtier.

Comme cela sera décrit plus en détail par la suite, le plateau 30 est configuré pour homogénéiser la vitesse axiale du liquide après passage au travers de ce plateau. Le plateau 30 divise la chambre de traitement 20 en deux compartiments : un premier compartiment en amont du plateau 30 à l'intérieur duquel débouche le conduit d'entrée 14, et un second compartiment en aval du plateau 30 et situé axialement du côté du fourreau 23.

Le plateau 30 comprend une pluralité d'orifices 30a traversants ménagés dans son épaisseur axiale. Comme cela sera décrit plus en détail par la suite, les orifices 30a permettent la génération d'une multitude de micro-jets de liquide uniformément répartis à l'intérieur de la chambre de traitement 20 en aval du plateau 30.

La section de passage des orifices 30a peut-être calibré afin de contrôler la vitesse de chaque micro-jet généré. De préférence, la distance séparant un orifice 30a d'un autre orifice 30a du plateau est égale. Les orifices 30a peuvent être agencés de différentes façons sur le plateau 34. Les orifices 30a peuvent par exemple être agencés sous formes de rangées parallèles. D'autres agencements des orifices 30a peuvent être envisagés sur le plateau 30.

Dans l'exemple de réalisation illustré, les orifices 30a s'étendent axialement dans l'épaisseur du plateau 34. Alternativement, il pourrait être possible de prévoir d'autres orientations pour les orifices 30a, par des orifices s'étendent obliquement dans l'épaisseur du plateau 30. Dans l'exemple de réalisation illustré, les orifices 30a présentent une forme cylindrique et de diamètre constant. Alternativement, les orifices 30a peuvent présenter d'autres formes, par exemple conique ou encore de section polygonale, ou encore se présenter sous forme de fentes. La section des orifices 30a peut également être variable.

Dans un mode de réalisation, le plateau 30 peut être réalisé en matériau réfléchissant les UV, tel que du Téflon^{®} ou de l'aluminium. Dans une autre mode de réalisation, le plateau 30 peut être transparent aux UV. Le plateau 30 est réalisé dans un matériau transparent aux UV, par exemple transparent aux UV a au moins 50%. Le plateau 30 peut par exemple être réalisé en quartz, ou en FEP (éthylène propylène fluoré) ou encore en PTFE (polytétrafluoroéthylène). Si le plateau 30 est réalisé en matériau réfléchissant les UV, la chambre de traitement 20 est délimitée axialement par la paroi de fond 23a du fourreau et par la face supérieure du plateau 30.

Le boîtier 12 comprend ici intérieurement un troisième joint 34 d'étanchéité supérieur annulaire interposé axialement entre le plateau 30 et le fourreau 23. Les joints 32, 34 sont situés à la périphérie du plateau 30. La chambre de traitement 20 est délimitée radialement par la surface intérieure de la paroi tubulaire 23b du fourreau, par les joints 32, 34 d'étanchéité, par le corps 24 du boîtier et par la surface extérieure 18c du conduit.

Le fonctionnement du dispositif 10 est le suivant.

Le flux de liquide F₁ est amené radialement à l'intérieur de la chambre de traitement 20 par le canal d'amenée 14a du conduit d'entrée de l'injecteur, et ce flux de liquide est dévié en rentrant en contact avec la portion de montage 24a tubulaire du corps. Ceci créé un régime turbulent à l'intérieur de la chambre de traitement 20 en amont du plateau 30, ce qui permet d'éviter d'avoir des zones où le liquide puisse stagner.

Ensuite, le liquide passe au travers des orifices 30a du plateau, ce qui permet la génération d'une multitude de micro-jets de liquide uniformément répartis à l'intérieur de la chambre de traitement 20 en aval de ce plateau.

Le plateau 30 forme un moyen d'homogénéisation de la vitesse axiale du liquide par le passage au travers des orifices 30a du plateau. Dans la zone de la chambre de traitement 20 située en aval du plateau 30, la vitesse axiale du liquide est réduite et homogénéisée.

Le flux liquide F₂ remonte à l'intérieur de la chambre de traitement 20. Le liquide remonte jusqu'à la paroi de fond 23a du fourreau et passe à proximité immédiate des sources 22. En aval du plateau 30, les gouttes de liquide sont irradiées de façon homogène par le rayonnement UV émis par les sources 22 dans la mesure où ces gouttes se déplacent sensiblement à la même vitesse.

Ensuite, le flux de liquide F₃ passe à l'intérieur du conduit 18 avant d'être évacué par le conduit de sortie 16. Le flux de liquide F₃ est aussi traité à l'intérieur du conduit 18 et du conduit de sortie 16 par le rayonnement UV émis par les sources 22. Lors du fonctionnement du dispositif 10, les sources 22 émettent un rayonnement d'UV en continu.

Dans les exemples de réalisation illustrés, le dispositif 10 est équipé du groupe de sources 22 d'émission de rayonnement UV.

En variante, il est possible de prévoir, en association du groupe de sources 22, au moins un autre groupe de sources additionnelles de rayonnement UV pour émettre un rayonnement UV à l'intérieur de la chambre de traitement 20 et à l'intérieur du conduit 18. Il est par exemple possible de prévoir un groupe de sources UV fixés sur la surface intérieure de la paroi tubulaire 23b du fourreau et émettant un rayonnement UV ayant une direction principale radiale. Alternativement ou en combinaison, il est aussi possible de prévoir un groupe de sources UV fixés sur le fond du boîtier, disposés autour du conduit 18 et émettant un rayonnement UV ayant une direction principale axiale orienté vers le haut.

## Revendications

1. Dispositif de traitement de liquide par rayonnements UV comprenant :
- un boîtier (12) s'étendant selon un axe longitudinal (X-X'),
- un canal d'amenée (14a) du liquide à l'intérieur du boîtier (12),
- un canal de sortie (16a) dudit liquide s'étendant axialement,
- un conduit (18) distinct du canal d'amenée (14a), monté au moins en partie à l'intérieur du boîtier (12) et coaxial au canal de sortie (16a), le conduit (18) étant en communication fluidique avec le canal de sortie (16a) et l'extrémité supérieure (18b) dudit conduit restant axialement à distance du boîtier (12),
- une chambre de traitement (20) du liquide en communication fluidique avec le canal d'amenée (14a) et à l'intérieur de laquelle s'étend au moins en partie le conduit (18), et
- au moins un groupe de sources (22) de rayonnement UV supportées par le boîtier et aptes à émettre chacune un rayonnement UV ayant une direction principale d'émission qui est orientée selon l'axe (X-X') longitudinal du boîtier, ledit groupe de sources (22) de rayonnement UV étant disposé sur le boîtier (12) pour émettre un rayonnement UV à l'intérieur de la chambre de traitement (20) et à l'intérieur du conduit (18), le conduit (18) étant transparent aux UV et le dispositif comprenant en outre :
- un fourreau (23) monté à l'intérieur du boîtier (12), entourant radialement le conduit (18) et restant radialement et axialement à distance dudit conduit, le fourreau (23) étant une pièce distincte du conduit (18),
- le fourreau (23) étant pourvu d'une paroi de fond (23a) transparente aux UV et délimitant axialement au moins en partie la chambre de traitement (20), et d'une paroi tubulaire (23b) délimitant radialement au moins en partie la chambre de traitement (20), la paroi tubulaire (23b) prolongeant axialement la paroi de fond (23a), l'extrémité supérieure (18b) dudit conduit restant axialement à distance de la paroi de fond (23a) du fourreau, **caractérisé en ce que** le dispositif comprend en outre au moins un moyen d'homogénéisation (40) de la vitesse axiale du flux de liquide amené par ledit canal d'amenée (16a) à l'intérieur du boîtier (12) qui comprend une rampe (40) hélicoïdale s'étendant au moins en partie autour de l'axe (X-X') longitudinal du boîtier et orientée axialement en direction de la paroi de fond (23a) du fourreau, le canal d'amenée (14a) débouchant à l'intérieur du boîtier dans la zone de la rampe (40) hélicoïdale en étant décalé par rapport à un plan médian (P) longitudinal dudit dispositif contenant l'axe longitudinal (X-X').

2. Dispositif selon la revendication 1, dans lequel le conduit (18) est supporté par le boîtier (12).

3. Dispositif selon la revendication 2, dans lequel l'extrémité inférieure (18a) du conduit (18) est disposée à l'intérieur d'une portion de montage (24a) tubulaire du boîtier (12).

4. Dispositif selon l'une quelconque des revendications précédentes, dans lequel le canal d'amenée (14a) débouche à l'intérieur du boîtier (12) dans une zone espacée axialement du fourreau (23).

5. Dispositif selon l'une quelconque des revendications précédentes, dans lequel le conduit (18) et le canal de sortie (16a) sont coaxiaux à l'axe longitudinal (X-X') du boîtier.

6. Dispositif selon l'une quelconque des revendications précédentes, dans lequel les sources (22) de rayonnement UV dudit groupe sont disposées sur le boîtier (12) axialement du côté de l'extrémité supérieure (18b) du conduit en étant décalées axialement par rapport à ladite extrémité supérieure.

7. Dispositif selon l'une quelconque des revendications précédentes, dans lequel les sources (22) de rayonnement UV dudit groupe sont disposées hors de la chambre de traitement (20).

8. Dispositif selon l'une quelconque des revendications précédentes, dans lequel les sources (22) de rayonnement UV dudit groupe sont décalées radialement au moins en partie par rapport au conduit (18).

9. Dispositif selon l'une quelconque des revendications précédentes, dans lequel le fourreau (23) est disposé en aval du moyen d'homogénéisation (40) en considérant le sens d'écoulement du liquide.

10. Dispositif selon l'une quelconque des revendications précédentes, dans lequel au moins une partie de la surface extérieure ou de la surface intérieure de la paroi tubulaire (23b) du fourreau est réfléchissante aux UV.

11. Dispositif selon l'une quelconque des revendications précédentes, dans lequel le boitier (12) comprend un corps (24) supportant le canal d'amenée (14a) et le canal de sortie (16a), et un capot (26) fixé de manière amovible sur le corps et supportant les sources (22) de rayonnement UV dudit groupe.

12. Dispositif selon l'une quelconque des revendications précédentes, dans lequel le conduit (18) est entièrement logé à l'intérieur du boitier (12).

13. Procédé de traitement de liquide par rayonnements UV à l'aide d'un dispositif de traitement selon l'une quelconque des revendications précédentes, dans lequel :
- un flux de liquide est amené tangentiellement à l'intérieur de la chambre de traitement (20) du dispositif de traitement par le canal d'amenée (14a), ledit flux de liquide étant entrainé en rotation autour de l'axe X-X' longitudinal par la rampe (40) hélicoïdale,
- ledit flux de liquide remontant à l'intérieur de la chambre de traitement (20) jusqu'à la paroi de fond (23a) du fourreau et passant ensuite à l'intérieur du conduit (18) avant d'être évacué par le canal de sortie (16a) s'étendant axialement, et
- les sources (22) de rayonnement UV du groupe émettent un rayonnement d'UV en continu pour traiter ledit flux de liquide à l'intérieur de la chambre de traitement (20), du conduit (18) et du canal de sortie (16a).

## Patentansprüche

1. Vorrichtung zur Behandlung von Flüssigkeit mit UV-Strahlen, umfassend:
- ein Gehäuse (12), das sich entlang einer Längsachse (X-X') erstreckt,
- einen Zuführkanal (14a) der Flüssigkeit innerhalb des Gehäuses (12),
- einen Auslasskanal (16a) der Flüssigkeit, der sich axial erstreckt,
- eine Leitung (18), die sich von dem Zuführkanal (14a) unterscheidet, mindestens zum Teil innerhalb des Gehäuses (12) montiert und zu dem Auslasskanal (16a) koaxial ist, wobei die Leitung (18) mit dem Auslasskanal (16a) in strömungstechnischer Kommunikation steht und das obere Ende (18b) der Leitung axial in Abstand zu dem Gehäuse (12) bleibt,
- eine Behandlungskammer (20) der Flüssigkeit, die mit dem Zuführkanal (14a) in strömungstechnischer Kommunikation steht und innerhalb der sich die Leitung (18) mindestens zum Teil erstreckt, und
- mindestens eine Gruppe UV-Strahlungsquellen (22), die von dem Gehäuse getragen werden und in der Lage sind, jeweils eine UV-Strahlung zu emittieren, welche eine Hauptemissionsrichtung aufweist, die entlang der Längsachse (X-X') des Gehäuses ausgerichtet ist, wobei die Gruppe UV-Strahlungsquellen (22) so an dem Gehäuse (12) angeordnet ist, dass sie eine UV-Strahlung innerhalb der Behandlungskammer (20) und innerhalb der Leitung (18) emittiert, wobei die Leitung (18) UV-transparent ist und die Vorrichtung weiter umfasst:
- eine Ummantelung (23), die innerhalb des Gehäuses (12) montiert ist, die Leitung (18) radial umgibt und radial und axial in Abstand zur Leitung bleibt, wobei die Ummantelung (23) ein Teil ist, das sich von der Leitung (18) unterscheidet,
- wobei die Ummantelung (23) mit einer Bodenwand (23a), die UV-transparent ist und die Behandlungskammer (20) mindestens zum Teil axial begrenzt, und mit einer rohrförmigen Wand (23b) versehen ist, die die Behandlungskammer (20) mindestens zum Teil radial begrenzt, wobei die rohrförmige Wand (23b) die Bodenwand (23a) axial verlängert, wobei das obere Ende (18b) der Leitung axial in Abstand zur Bodenwand (23a) der Ummantelung bleibt, **dadurch gekennzeichnet, dass** die Vorrichtung weiter mindestens ein Mittel zum Homogenisieren (40) der axialen Geschwindigkeit des durch den Zuführkanal (16a) innerhalb des Gehäuses (12) geführten Flüssigkeitsstroms umfasst, das eine spiralförmige Rampe (40) umfasst, die sich mindestens zum Teil um die Längsachse (X-X') des Gehäuses erstreckt und axial in Richtung der Bodenwand (23a) der Ummantelung ausgerichtet ist, wobei der Zuführkanal (14a) innerhalb des Gehäuses in den Bereich der spiralförmigen Rampe (40) mündet, wobei sie in Bezug auf eine Längsmittelebene (P) der Vorrichtung, die die Längsachse (X-X') enthält, versetzt ist.

2. Vorrichtung nach Anspruch 1, wobei die Leitung (18) von dem Gehäuse (12) getragen wird.

3. Vorrichtung nach Anspruch 2, wobei das untere Ende (18a) der Leitung (18) innerhalb eines röhrenförmigen Montageabschnitts (24a) des Gehäuses (12) angeordnet ist.

4. Vorrichtung nach einem der vorstehenden Ansprüche, wobei der Zuführkanal (14a) innerhalb des Gehäuses (12) in einem Bereich mündet, der axial von der Ummantelung (23) beabstandet ist.

5. Vorrichtung nach einem der vorstehenden Ansprüche, wobei die Leitung (18) und der Auslasskanal (16a) zur Längsachse (X-X') des Gehäuses koaxial sind.

6. Vorrichtung nach einem der vorstehenden Ansprüche, wobei die UV-Strahlungsquellen (22) der Gruppe auf dem Gehäuse (12) axial zur Seite des oberen Endes (18b) der Leitung angeordnet sind, wobei sie in Bezug auf das obere Ende axial versetzt sind.

7. Vorrichtung nach einem der vorstehenden Ansprüche, wobei die UV-Strahlungsquellen (22) der Gruppe außerhalb der Behandlungskammer (20) angeordnet sind.

8. Vorrichtung nach einem der vorstehenden Ansprüche, wobei die UV-Strahlungsquellen (22) der Gruppe mindestens zum Teil in Bezug auf die Leitung (18) radial versetzt sind.

9. Vorrichtung nach einem der vorstehenden Ansprüche, wobei die Ummantelung (23) unter Berücksichtigung der Strömungsrichtung der Flüssigkeit stromabwärts des Homogenisierungsmittels (40) angeordnet ist.

10. Vorrichtung nach einem der vorstehenden Ansprüche, wobei mindestens ein Teil der Außenfläche oder der Innenfläche der rohrförmigen Wand (23b) der Ummantelung UV-reflektierend ist.

11. Vorrichtung nach einem der vorstehenden Ansprüche, wobei das Gehäuse (12) einen Körper (24), der den Zuführkanal (14a) und den Auslasskanal (16a) trägt, und eine Abdeckung (26) umfasst, die abnehmbar an dem Körper befestigt ist und die UV-Strahlungsquellen (22) der Gruppe trägt.

12. Vorrichtung nach einem der vorstehenden Ansprüche, wobei die Leitung (18) vollständig innerhalb des Gehäuses (12) untergebracht ist.

13. Verfahren zur Behandlung von Flüssigkeit mit UV-Strahlen mithilfe einer Behandlungsvorrichtung nach einem der vorstehenden Ansprüche, wobei:
- ein Flüssigkeitsstrom durch den Zuführkanal (14a) tangential in die Behandlungskammer (20) der Behandlungsvorrichtung geführt wird, wobei der Flüssigkeitsstrom durch die spiralförmige Rampe (40) um die Längsachse X-X' in Drehung versetzt wird,
- der Flüssigkeitsstrom innerhalb der Behandlungskammer (20) bis zu der Bodenwand (23a) der Ummantelung aufsteigt und dann innerhalb der Leitung (18) verläuft, bevor er durch den sich axial erstreckenden Auslasskanal (16a) abgeführt wird, und
- die UV-Strahlungsquellen (22) der Gruppe eine kontinuierliche UV-Strahlung emittieren, um den Flüssigkeitsstrom innerhalb der Behandlungskammer (20), der Leitung (18) und des Auslasskanals (16a) zu behandeln.

## Claims

1. Device for treating liquids with UV radiation comprising:
- a housing (12) extending along a longitudinal axis (X-X'),
- a channel (14a) for supplying the liquid inside the housing (12),
- an outlet channel (16a) for said liquid extending axially,
- a conduit (18) separate from the supply channel (14a), mounted at least partially inside the housing (12) and coaxial to the outlet channel (16a), the conduit (18) being in fluid communication with the outlet channel (16a) and the upper end (18b) of said conduit remaining axially away from the housing (12),
- a chamber (20) for treating the liquid in fluid communication with the supply channel (14a) and within which the conduit (18) extends at least partially, and
- at least one group of UV radiation sources (22) supported by the housing and able to each emit UV radiation having a main emission direction that is oriented along the longitudinal axis (X-X') of the housing, said group of UV radiation sources (22) being arranged on the housing (12) to emit UV radiation inside the treatment chamber (20) and inside the conduit (18), the conduit (18) being transparent to UV and the device further comprising:
- a sleeve (23) mounted inside the housing (12), radially surrounding the conduit (18) and remaining radially and axially away from said conduit, the sleeve (23) being a separate part form the conduit (18),
- the sleeve (23) being provided with a bottom wall (23a) that is transparent to UV and axially delimits at least part of the treatment chamber (20), and a tubular wall (23b) radially delimiting at least partially the treatment chamber (20), the tubular wall (23b) extending axially from the bottom wall (23a), the upper end (18b) of said conduit remaining axially at a distance from the bottom wall (23a) of the sleeve, **characterised in that** the device further comprises at least one means for homogenising (40) the axial speed of the flow of liquid supplied by said supply channel (16a) inside the housing (12) which comprises a helical ramp (40) extending at least partially around the longitudinal axis (X-X') of the housing and oriented axially towards the bottom wall (23a) of the sleeve, the supply channel (14a) opening into the inside of the housing in the area of the helical ramp (40), offset from a longitudinal median plane (P) of said device containing the longitudinal axis (X-X').

2. Device according to Claim 1, wherein the conduit (18) is supported by the housing (12).

3. Device according to Claim 2, wherein the lower end (18a) of the conduit (18) is arranged inside a tubular mounting portion (24a) of the housing (12).

4. Device according to any one of the preceding claims, wherein the supply channel (14a) opens into the inside the housing (12) in an area axially spaced apart from the sleeve (23).

5. Device according to any one of the preceding claims, wherein the conduit (18) and the outlet channel (16a) are coaxial to the longitudinal axis (X-X') of the housing.

6. Device according to any one of the preceding claims, wherein the UV radiation sources (22) of said group are arranged on the housing (12) axially on the side of the upper end (18b) of the conduit, axially offset from said upper end.

7. Device according to any one of the preceding claims, wherein the UV radiation sources (22) of said group are arranged outside the treatment chamber (20).

8. Device according to any one of the preceding claims, wherein the UV radiation sources (22) of said group are at least partially offset radially from the conduit (18).

9. Device according to any one of the preceding claims, wherein the sleeve (23) is arranged downstream of the homogenisation means (40) considering the direction of flow of the liquid.

10. Device according to any one of the preceding claims, wherein at least a portion of the outer surface or the inner surface of the tubular wall (23b) of the sleeve is UV-reflective.

11. Device according to any one of the preceding claims, wherein the housing (12) comprises a body (24) supporting the supply channel (14a) and the outlet channel (16a), and a cover (26) removably fastened to the body and supporting the UV radiation sources (22) of said group.

12. Device according to any one of the preceding claims, wherein the conduit (18) is fully housed inside the housing (12) .

13. Method for treating liquids by UV radiation using a treatment device according to any one of the preceding claims, wherein:
- a flow of liquid is supplied tangentially inside the treatment chamber (20) of the treatment device by the supply channel (14a), said flow of liquid being driven in rotation about the longitudinal axis X-X' by the helical ramp (40),
- said flow of liquid rising inside the treatment chamber (20) to the bottom wall (23a) of the sleeve and then passing inside the conduit (18) before being discharged by the axially extending outlet channel (16a), and
- the UV radiation sources (22) of the group emit continuous UV radiation to treat said flow of liquid inside the treatment chamber (20), the conduit (18) and the outlet channel (16a).
